# EUROPÄISCHE PATENTANMELDUNG

(11) **EP 3 611 931 A1**
(43) Veröffentlichungstag der Anmeldung: **19.02.2020**
(21) Anmeldenummer: 19188970.8
(22) Anmeldetag: 30.07.2019
(51) Int. Cl.: H04Q 9/00, G08C 17/02

(54) **ELEKTROKABEL ZUR STROMVERSORGUNG UND DRAHTLOSER DATENÜBERTRAGUNG MINDESTENS EINES ELEKTRISCH ARBEITENDEN, DATENGENERIERNDEN GERÄTES**

(30) Priorität: 16.08.2018 DE 102018119954
(71) Anmelder: SIKA Dr.Siebert & Kühn GmbH & Co. KG., 34260 Kaufungen (DE)
(72) Erfinder: Siebert, Christian, 34131 Kassel (DE); Owono, Gottfried, 34125 Kassel (DE)
(74) Vertreter: Patentanwälte Walther Hinz Bayer PartGmbB

(57) **Zusammenfassung**

Gegenstand der Erfindung ist ein Elektrokabel (1) zur Stromversorgung mindestens eines elektrisch arbeitenden, datengenerierenden Gerätes, wobei das Elektrokabel (1) mindestens eine Einrichtung (40) zur drahtlosen Datenübertragung von Daten des mindestens einen elektrisch arbeitenden, datengenerierenden Gerätes an eine Empfangseinheit (30) aufweist.

## Beschreibung

Die Erfindung betrifft ein Elektrokabel zur Stromversorgung mindestens eines elektrisch arbeitenden, datengenerierenden Gerätes.

Elektrisch arbeitende, datengenerierende Geräte sind aus dem Stand der Technik hinreichend bekannt. Dies sind beispielsweise Messgeräte, durch die physikalische Größen wie Temperatur, Volumenstrom, Druck usw. ermittelt werden. Häufig genug besteht ein Interesse daran, diese Daten aus der Entfernung auszulesen. Insofern ist bekannt, das Messgerät mit einer Sendeeinheit elektrisch zu verbinden, sodass die durch das Messgerät ermittelten Werte von der Sendeeinheit an ein entsprechendes Empfangsgerät übermittelt werden. Das heißt, es kann eine Kontrolle der durch das Messgerät ermittelten Daten aus der Entfernung vorgenommen werden.

Nachteilig am Stand der Technik ist, dass eine gesonderte Einrichtung erforderlich ist, die die Datenübertragung bewerkstelligt. Diese gesonderte Einrichtung muss mit Strom versorgt werden, was den Aufbau komplexer gestaltet und insbesondere aufgrund der komplexeren Gestaltung auch fehleranfälliger ist. Insbesondere muss auch das Messgerät mit entsprechenden gesonderten Anschlüssen für die Sendeeinheit versehen sein.

Die der Erfindung zugrunde liegende Aufgabe besteht nunmehr darin, hier Abhilfe zu schaffen. Insbesondere besteht die Aufgabe darin, die Möglichkeit zu eröffnen, mit weniger Bauteilen als nach dem herkömmlichen Stand der Technik, die drahtlose Datenübertragung zu bewerkstelligen.

Zur Lösung der Aufgabe wird erfindungsgemäß vorgeschlagen, dass das Elektrokabel mindestens eine Einrichtung zur drahtlosen Datenübertragung von Daten des Gerätes an eine Empfangseinheit aufweist. Hieraus wird deutlich, dass das Elektrokabel als ein einziges Bauteil sowohl die Stromversorgung des elektrisch arbeitenden, datengenerierenden Gerätes bewirkt als auch durch die Einrichtung zur drahtlosen Datenübertragung die Datenübertragung an eine Empfangseinheit, z. B. ein Smartphone oder ein Tablet, vornimmt.

Insbesondere bei mehreren elektrisch arbeitenden, datengenerierenden Geräten können mehrere einzelne Kabel von der Einrichtung zur drahtlosen Datenübertragung abzweigen und zu einzelnen Messgeräten zur Stromversorgung geführt werden. Von den einzelnen Messgeräten werden dann Daten zu der Einrichtung zur drahtlosen Datenübertragung übermittelt. Das heißt, dass ein Kabelbündel von der Einrichtung zur drahtlosen Datenübertragung zu den einzelnen elektrisch arbeitenden, datengenerierenden Geräten, z. B. Messgeräten, abgeht. Die Datenübertragung zu der Einrichtung zur drahtlosen Datenübertragung kann hierbei über die Leitungen zur Stromversorgung der elektrisch arbeitenden, datengenerierenden oder datenermittelnde Geräte erfolgen.

Des Weiteren ist insbesondere vorgesehen, dass das elektrisch arbeitende, datengenerierende oder datenermittelnde Gerät z. B. ein Messgerät für physikalische Größen wie Temperatur, Volumenstrom usw. ist. Zu den datengenerierenden Geräten sollen aber auch solche zählen, die Daten von Vorrichtungen und Anlagen, z. B. Werkzeugmaschinen, ermitteln, deren Kenntnis zum reibungslosen Betrieb erforderlich ist.

Vorteilhafte Merkmale und Ausgestaltungen der Erfindung ergeben sich aus den Unteransprüchen.

Vorteilhaft weist das Elektrokabel zur Stromversorgung des elektrisch arbeitenden, datengenerierenden Gerätes mindestens einen Stecker auf.

Hierbei kann vorgesehen sein, dass die mindestens eine Einrichtung zur drahtlosen Datenübertragung inhärenter Teil des Steckers ist. Das heißt, dass die Einrichtung zur drahtlosen Datenübertragung in den Stecker integriert ist. Das bedeutet aber auch, dass dann, wenn der Stecker mit dem Messgerät verbunden ist, nicht nur die Stromversorgung des Messgerätes über diesen Stecker bewerkstelligt wird, sondern auch die Datenübertragung. Diese Variante ist bevorzugt einsetzbar bei lediglich einem elektrisch arbeitenden, datengenerierenden Geräts. Vorteilhaft hierbei ist die Nachrüstbarkeit bei bestehenden Anlagen, z. B. Messgeräten oder auch Werkzeugmaschinen. Das heißt, dass ein solches erfindungsgemäßes Kabel überall dort eingesetzt werden kann, wo zwischen einer Stromversorgung und einem datengenerierenden Gerät nicht nur Strom transportiert, sondern auch Daten übermittelt werden.

Vorteilhaft weist die Einrichtung zur drahtlosen Datenübertragung des Weiteren einen Datenspeicher auf, der die Möglichkeit eröffnet, zeitlich periodisch Daten bzw. Datenpakete zu übersenden. Hierzu ist nach einem weiteren Merkmal der Erfindung vorgesehen, dass die Einrichtung zur drahtlosen Datenübertragung programmierbar ist. Das heißt, es können zeitliche Abstände vorgegeben werden, innerhalb derer die bereits zuvor genannten Datenpakete verschickt werden.

Gegenstand der Erfindung ist ebenfalls die Verwendung eines Elektrokabels gemäß einem oder mehreren der Ansprüche 1 bis 7 für ein Messgerät einer landwirtschaftlichen Verteileinrichtung für Flüssigkeiten, wie Dünger oder Pflanzenschutzmittel auf landwirtschaftlichen Flächen, wobei durch das Messgerät, insbesondere der Druck und die Durchflussmenge ermittelt werden, mit der die Verteileinrichtung die Flüssigkeit ausbringt, wobei diese Daten durch die Einrichtung zur drahtlosen Datenübertragung an eine Empfangseinheit, z. B. ein Tablet oder ein Handy übermittelt werden. Gerade in der Landwirtschaft hat es sich als vorteilhaft herausgestellt, wenn nachgehalten werden kann, welche Mengen an Dünger und/oder Pflanzenschutzmittel zu welcher Zeit auf die landwirtschaftlichen Flächen ausgebracht worden ist. Dies vor dem Hintergrund, dass nur genau die Mengen ausgebracht werden, die notwendig sind, um eine Überfrachtung der Böden, beispielsweise mit Düngemitteln, zu vermeiden. Dies vor dem Hintergrund, dass insbesondere die durch die Aufbringung von Düngemitteln, z. B. Gülle, erzeugten Stickstoffeintragungen reduziert werden können.

Gleiches gilt sinngemäß auch für Pflanzenschutzmittel, wie z. B. Herbizide, Insektizide, Fungizide und Pestizide, um die Belastung der Böden mit solchen Stoffen zu reduzieren.

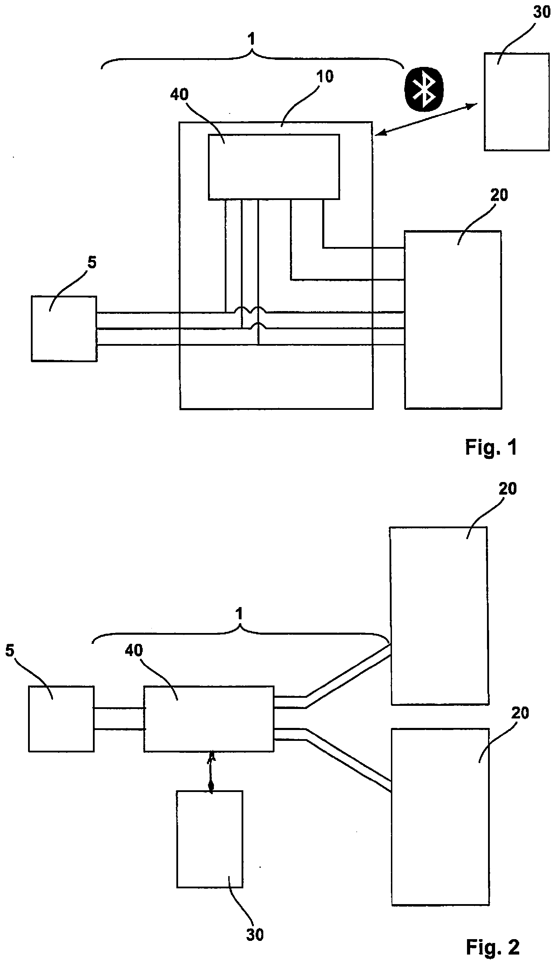

Anhand der Zeichnung gemäß den Figuren 1 und 2 wird die Erfindung nachstehend beispielhaft näher erläutert.

Gemäß Fig. 1 und Fig. 2 ist das Kabel zur Stromversorgung mit 1 bezeichnet, der Stecker mit 10 und das Messgerät mit 20. Das Kabel ist mit einer Stromquelle 5 verbunden. Die Empfangseinheit zum Empfang der übermittelten Daten hat das Bezugszeichen 30. Durch das Elektrokabel 1 wird das Messgerät 20 über den Stecker 10 mit elektrischer Energie versorgt. Die Stromversorgung des Messgerätes 20 durch den Stecker 10 wird auch benutzt, um die in den Stecker integrierte Einrichtung zur drahtlosen Datenübertragung 40 mit Strom zu versorgen. Darüber hinaus ist die Einrichtung zur drahtlosen Datenübertragung 40 zur Übertragung von Daten mit dem Messgerät 20 datenübertragend verbunden. Der Stecker 10 weist hierbei entsprechende Steckkontakte zur steckbaren Verbindung mit dem Messgerät auf. Die Datenübertragung von dem Messgerät zu der Einrichtung zur drahtlosen Datenübertragung kann hierbei auch über die Kabel zur Stromversorgung erfolgen.

Fig. 2 zeigt ein Elektrokabel 1 mit einer Einrichtung zur drahtlosen Datenübertragung, wobei die Stromversorgung für mehrere Messgeräte in der Einrichtung zur drahtlosen Datenübertragung abzweigt. Das heißt, es können die Daten mehrerer Messgeräte erfasst und auch drahtlos weitergeleitet werden.

Beispielsweise durch Bluetooth oder WLAN erfolgt durch die Einrichtung zur drahtlosen Datenübertragung 40 die Übermittlung der Daten an die Empfangseinheit 30, z. B. ein Handy oder ein Tablet.

### Bezugszeichen liste:

- 1: Elektrokabel
- 5: Stromquelle
- 10: Stecker
- 20: Messgerät
- 30: Empfangseinheit
- 40: Einrichtung zur drahtlosen Datenübertragung

## Patentansprüche

1. Elektrokabel (1) zur Stromversorgung mindestens eines elektrisch arbeitenden, datengenerierenden Gerätes,
**dadurch gekennzeichnet,**
**dass** das Elektrokabel (1) mindestens eine Einrichtung (40) zur drahtlosen Datenübertragung von Daten des mindestens einen elektrisch arbeitenden, datengenerierenden Gerätes an eine Empfangseinheit (30) aufweist.

2. Elektrokabel (1) nach Anspruch 1,
**dadurch gekennzeichnet,**
**dass** das Elektrokabel (1) mindestens einen Stecker (10) zur Stromversorgung des mindestens einen elektrisch arbeitenden, datengenerierenden Geräts (20) aufweist.

3. Elektrokabel (1) nach Anspruch 1 oder 2,
**dadurch gekennzeichnet,**
**dass** das elektrisch arbeitende, datengenerierende Gerät ein Messgerät (20) für physikalische Größen wie Temperatur, Volumenstrom oder Druck ist.

4. Elektrokabel (1) nach einem der Ansprüche 2 oder 3,
**dadurch gekennzeichnet,**
**dass** die mindestens eine Einrichtung (40) zur drahtlosen Datenübertragung Teil des Steckers (10) ist.

5. Elektrokabel (1) nach einem der voranstehenden Ansprüche,
**dadurch gekennzeichnet,**
**dass** die Einrichtung (40) zur drahtlosen Datenübertragung mit einem Datenspeicher in Verbindung steht.

6. Elektrokabel (1) nach Anspruch 5,
**dadurch gekennzeichnet,**
**dass** der Datenspeicher Teil des Steckers (10) ist.

7. Elektrokabel (1) nach einem der voranstehenden Ansprüche,
**dadurch gekennzeichnet,**
**dass** die Einrichtung (40) zur drahtlosen Datenübertragung programmierbar ist.

8. Verwendung eines Elektrokabels gemäß einem oder mehrerer der Ansprüche 1 bis 7 für ein Messgerät (20) einer landwirtschaftlichen Verteileinrichtung für Flüssigkeiten, wie Dünger oder Pflanzenschutzmittel auf landwirtschaftlichen Flächen, wobei durch das Messgerät (20) insbesondere der Druck und die Durchflussmenge ermittelt werden, mit der die Verteileinrichtung die Flüssigkeit ausbringt, wobei diese Daten durch die Einrichtung zur drahtlosen Datenübertragung (40) an ein Empfangsgerät (30) übermittelt werden.
